(19) Europäisches Patentamt
European Patent Office
Office européen des brevets

(11) **EP 3 377 733 B1**

(12) **FASCICULE DE BREVET EUROPEEN**

(45) Date de publication et mention
de la délivrance du brevet:
**03.07.2019 Bulletin 2019/27**

(21) Numéro de dépôt: **16809996.8**

(22) Date de dépôt: **18.11.2016**

(51) Int Cl.:
*F01D 25/20* *(2006.01)*      *F02C 7/36* *(2006.01)*

(86) Numéro de dépôt international:
**PCT/FR2016/053018**

(87) Numéro de publication internationale:
**WO 2017/085430 (26.05.2017 Gazette 2017/21)**

(54) **SYSTEME D'ALIMENTATION EN FLUIDE DE LUBRIFICATION D'AU MOINS UN ORGANE D'UN ENSEMBLE PROPULSIF D'AERONEF ET UN TEL PROCÉDÉ**

SCHMIERSTOFFZUFUHRSYSTEM ZU EINEM BESTANDTEIL EINES SCHUBERZEUGERS EINES FLUGGERÄTS UND VERFAHREN

SYSTEM AND METHOD FOR SUPPLYING LUBRICATION FLUID TO AT LEAST ONE MEMBER OF AN AIRCRAFT PROPULSION ASSEMBLY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.11.2015 FR 1561151**

(43) Date de publication de la demande:
**26.09.2018 Bulletin 2018/39**

(73) Titulaire: **Safran Aircraft Engines**
**75015 Paris (FR)**

(72) Inventeur: **CHALAUD, Sébastien, Christophe**
**77550 Moissy-Cramayel Cedex (FR)**

(74) Mandataire: **Cabinet Beau de Loménie**
**158, rue de l'Université**
**75340 Paris Cedex 07 (FR)**

(56) Documents cités:
**EP-A1- 0 474 585      EP-A2- 0 151 968**
**DE-A1- 4 304 482      FR-A1- 2 950 864**
**FR-A1- 3 020 403      US-A- 2 916 875**
**US-A- 5 168 704**

**Description**

Arrière-plan de l'invention

L'invention concerne un système d'alimentation en fluide de lubrification d'au moins un organe d'un moteur d'aéronef.

Les nouvelles architectures de moteurs d'aéronefs, tels que par exemple les architectures UHBR (Ultra-High-Bypass Ratio, c'est-à-dire des moteurs à double flux et à taux de dilution très élevé), ou à soufflante non carénée de type Open Rotor, ou encore les dernières générations de turbopropulseurs, font de plus en plus intervenir des boîtes de réduction, notée RGB pour « Reduction Gear Box » en anglais, qui nécessitent une forte lubrification particulièrement contraignante et qui génèrent en outre d'importantes puissances à dissiper dans l'huile.

La dissipation de cette puissance contenue dans l'huile pose un problème important.

Deux sources froides sont disponibles sur le moteur : le carburant, c'est-à-dire du fuel, et l'air. On privilégie généralement la dissipation des calories dans le fuel afin de récupérer un maximum d'énergie avant la combustion, le complément de puissance étant ensuite dissipé dans l'air.

Les échangeurs air/huile permettant la dissipation des calories de l'huile vers l'air réduisent les performances du moteur. Il vaut donc mieux pour le moteur réduire au maximum la puissance dissipée dans l'huile.

Les boites de réduction de puissance utilisées sur des applications de type UHBR, turbopropulseur ou Open Rotor permettent de réduire la vitesse de rotation entre l'arbre entrant et l'arbre sortant. Les puissances en jeu sont énormes puisqu'elles peuvent atteindre plusieurs dizaines de Mégawatts, et les pertes, même réduites à leur minimum, atteignent plusieurs dizaines voire centaines de kilowatts. Ces pertes représentent donc la contribution majeure en matière de puissance à dissiper dans l'huile.

Ces boites de réduction sont sensibles au débit d'huile reçu. En effet, en fonction du régime de rotation de l'arbre entrant et du couple en jeu, le débit d'huile optimal varie. S'éloigner de ce débit d'huile optimal diminue le rendement de la boite de réduction et augmente par conséquent les pertes qu'il faut ensuite dissiper. S'éloigner de ce débit peut même dans certaines phases de vol endommager la boîte de réduction.

Pour les différentes raisons évoquées ci-dessus, il est avantageux de pouvoir réguler le débit d'huile alimentant la boîte de réduction.

Cependant, la gestion du débit d'huile, et notamment celui alimentant la boite de réduction, est difficile à réaliser de manière satisfaisante dans toutes les phases de vol.

Il existe déjà des dispositifs et des procédés connus de régulation de débit de fluide fourni par un système de pompage, le fluide pouvant être du carburant pour l'alimentation de la turbomachine ou encore de l'huile pour l'alimentation notamment d'une boîte de réduction de puissance.

Le fonctionnement de ces dispositifs repose généralement sur un débit d'alimentation dépendant du régime moteur, généré par une pompe volumétrique typiquement entraînée en rotation à partir d'un arbre de turbine du moteur. Le débit généré par la pompe volumétrique étant fixe pour un régime moteur donné, celle-ci est associée un système mécanique de dosage en sortie, par exemple un doseur à fente, permettant de réaliser un dosage du débit nécessaire.

Cependant, dans ce type de système connu, pour réaliser le bon dosage à l'aide du système mécanique de dosage, la pompe volumétrique doit être entraînée de façon à pomper plus de débit que nécessaire, prélevant trop de puissance sur le moteur par rapport au besoin. Le système doit par conséquent prévoir un circuit de recirculation du trop-plein de débit délivré par la pompe volumétrique.

Le fluide ainsi redirigé dans le circuit de recirculation va s'échauffer sous l'influence d'un fort différentiel de pression et générer des pertes calorifiques à dissiper.

Ce type de système utilisant une pompe volumétrique n'est donc pas optimal.

Il est également connu, notamment du document FR 2 882 095, des systèmes d'alimentation en fluide utilisant classiquement une pompe centrifuge entraînée par un arbre moteur de la turbomachine de sorte que le régime de rotation est en corrélation linéaire constante avec le régime de la turbomachine.

Cependant, dans ce type de système connu, il est difficile d'assurer le niveau de pression minimale nécessaire à la circulation du fluide lorsque le moteur de la turbomachine fonctionne à bas régime. Le besoin d'assurer le niveau de pression minimale à bas régime amène généralement à sur-dimensionner la pompe du système d'alimentation.

Par ailleurs, il est connu des systèmes fonctionnant avec un débit indépendant du régime moteur de la turbomachine.

Par exemple, il est connu un ensemble de pompage pour fuel et huile, avec une série de pompes entraînées par un arbre d'un moteur électrique piloté par un contrôleur. L'alimentation en fuel et lubrifiant fournie par l'ensemble de pompage n'est donc pas liée au régime moteur de la turbomachine. Les pompes volumétriques à fuel et à huile étant entraînées par un même arbre, il est prévu qu'elles puissent être des pompes à cylindrée variable pilotées indépendamment par le contrôleur de façon à décorréler les débits de fuel et d'huile fournis à la turbomachine.

Il est encore connu un ensemble de pompage pour fuel qui comprend notamment une pompe volumétrique entraînée par un moteur électrique indépendant de la boîte d'entraînement des accessoires, et donc du régime de la turbomachine, de sorte que le débit fourni par la pompe soit piloté en régulant la vitesse du moteur électrique.

Les documents DE4304482A1 et US5168704 A1 décrivent des systèmes d'alimentation en huile de lubrification connus dans l'art antérieur.

Cependant, de tels systèmes sans doseur et basés sur un entraînement électrique de pompes volumétriques à cylindrées fixes ou variables présentent généralement un haut degré de complexité, ou nécessitent que la régulation et les tolérances de la pompe soient suffisamment fines et maîtrisées pour permettre un dosage précis.

Objet et résumé de l'invention

L'invention vise à fournir un système d'alimentation en fluide de lubrification, appelé huile de lubrification de manière générique, d'au moins un organe d'un moteur d'aéronef permettant de délivrer un débit contrôlé de l'huile de lubrification, sans sur-dimensionner la pompe du système d'alimentation et sans recirculation du fluide pompé qui provoque un échauffement généralement non souhaitable.

Un objet de l'invention propose un système d'alimentation en huile de lubrification d'organes d'une turbomachine dont un réducteur. Le système d'alimentation comprend :

- un dispositif de pompage cinétique destiné à être relié en amont à un réservoir d'huile et entraîné en rotation à une vitesse décorrélée d'un régime de fonctionnement de la turbomachine, le dispositif de pompage cinétique (2) comportant une pompe cinétique ou au moins deux pompes cinétiques reliées fluidiquement en série
- un noeud de séparation raccordé à la sortie du dispositif de pompage cinétique,
- une première branche de distribution pour lubrifier le réducteur raccordée du dispositif de pompage cinétique via le noeud de séparation,
- une seconde branche de distribution pour lubrifier d'autres organes raccordée au dispositif de pompage cinétique via le noeud de séparation, la seconde branche de distribution comportant une pompe volumétrique, et
- au moins un doseur de fluide à fente de dosage alimenté par la pompe cinétique via le noeud de séparation et destiné à alimenter le réducteur.

Les pompes hydrauliques se divisent en deux catégories : les pompes volumétriques qu'on rencontre dans la majorité des systèmes d'alimentation en fluide, et les pompes cinétiques connues également en anglais sous la dénomination « Non-positive Displacement Pumps », dans lesquelles la pression de sortie est générée par l'énergie cinétique du fluide mis en mouvement par la pompe.

Contrairement à une pompe volumétrique qui impose un débit en sortie, une pompe cinétique permet d'imposer une pression en sortie. Dans la présente invention, le doseur raccordé en aval de la pompe cinétique permet de piloter le débit. La pression en amont du doseur est en effet imposée par la pompe centrifuge, et dans l'application à la lubrification d'une boite de réduction la pression en aval est imposée par la pression de l'enceinte de la boite et par la perte de charge des gicleurs. Le différentiel de pression aux bornes du doseur est variable mais peut être connu, par exemple par modélisation de la pression aval en fonction des phases de vol. Le pilotage du débit s'effectue donc par un pilotage de la section de passage du doseur en connaissance du différentiel de pression aux bornes du doseur.

L'association du doseur de fluide avec la pompe cinétique permet ainsi d'adapter le débit de fluide en aval du doseur sans avoir recours à un circuit de recirculation de fluide reliant la sortie de la pompe à son entrée, et sans risquer d'endommager la pompe.

L'utilisation du doseur de fluide permet d'éviter toute action mécanique directe sur la pompe, contrairement en particulier aux systèmes d'alimentation utilisant des pompes volumétriques à cylindrée variable, et donc d'éviter tout impact relatif sur sa fiabilité.

De plus, le débit sortant de la pompe cinétique correspond toujours aux besoins de fluide en aval, ce qui permet de fournir un système optimal en matière de puissance à fournir à la pompe. En particulier, dans le cas où les besoins en aval sont ceux d'une boîte de réduction alimentée en huile, il n'y a pas de perte de puissance qui serait provoquée par barattage du fait d'un excès d'huile fourni à la boite.

En outre, la pompe étant décorrélée du régime moteur de la turbomachine, le système d'alimentation peut fournir du débit à un organe comme une boîte de réduction de puissance, à très bas régime, en phase d'enroulement ou de « windmilling » notamment.

L'alimentation d'une pompe volumétrique à l'aide de la pompe cinétique permet de s'assurer d'avoir une bonne pression de gavage de la pompe volumétrique et donc de s'assurer des bonnes performances de cette dernière. Cela permet aussi de réduire la puissance que la pompe volumétrique doit fournir.

Ainsi, la pression d'huile à l'entrée la pompe volumétrique étant plus importante grâce au gavage de la pompe volumétrique par la pompe cinétique, le rendement de la pompe volumétrique est amélioré. La pompe volumétrique peut être prévue plus petite et son régime de fonctionnement peut être augmenté, pour délivrer le débit et la pression de sortie requis vers les autres organes à lubrifier. Cela permet de réaliser un gain d'encombrement et de masse du dispositif d'alimentation, malgré le fait que l'encombrement axial et la masse de la pompe cinétique puissent devoir être légèrement augmentés pour passer plus de débit. Par exemple, les aubes du rotor de la pompe cinétique peuvent être prévues un peu plus longues axialement pour passer le débit maximal requis.

De plus, grâce au gavage de la pompe volumétrique par la pompe cinétique, la pression d'huile à l'entrée la pompe volumétrique est toujours suffisante pour éviter tout risque de cavitation de la pompe. La pressurisation du réservoir d'huile pressurisé n'est donc pas nécessaire, la pression de l'huile à l'entrée de la pompe cinétique pouvant être égale ou proche de la pression atmosphérique. Ceci permet la conception d'un réservoir d'huile moins renforcé, donc plus léger. De plus, la pression plus faible dans le réservoir d'huile améliore le rendement des pompes de récupération d'huile qui retournent l'huile du système vers le réservoir, ce qui permet l'adoption de pompes de récupération un peu plus compactes et légères. Le rendement, l'encombrement et la masse de l'ensemble du système d'alimentation sont ainsi optimisés.

Selon un premier aspect du système d'alimentation en fluide, le système peut comprendre en outre un dispositif d'entraînement en rotation du dispositif de pompage cinétique à une vitesse constante.

L'entraînement à vitesse constante permet de réduire l'électronique nécessaire pour la commande du système.

De plus, le choix d'un entraînement à vitesse constante décorrélé du régime de fonctionnement de la turbomachine permet de s'affranchir des inconvénients de fonctionnement à bas régime d'une pompe à vitesse variable.

En effet, si la pompe était à vitesse variable en corrélation linéaire constante avec le régime de la turbomachine, par exemple en étant mécaniquement reliée à un des arbres moteur comme fait traditionnellement, la pompe fournirait trop peu de pression à bas régime dans le cas d'une pompe cinétique, comme lors de l'enroulement moteur ou lors des ralentis. Il faudrait alors augmenter le rayon de la pompe pour avoir une pression suffisante. La pompe fournirait alors beaucoup plus de pression au fluide que nécessaire à haut régime, notamment lors des phases de décollage ou de croisière, étant donné que la pression évolue avec le carré de la vitesse. On prélèverait alors trop de puissance sur le moteur et l'huile aurait trop de pression, ce qui est également gênant.

Selon un deuxième aspect du système d'alimentation en fluide, le système peut comprendre en outre un dispositif d'entraînement du dispositif de pompage cinétique à un régime de rotation pouvant varier entre un régime minimum et un régime maximum, ledit régime maximum étant supérieur à 1,2 fois le régime minimum et inférieur à 2 fois le régime minimum.

Dans le cas d'un dispositif de rotation à régime variable, le dispositif d'entraînement en rotation du dispositif de pompage cinétique peut comprendre un arbre d'entraînement couplé à un arbre de turbine de la turbomachine par l'intermédiaire d'une boîte de vitesses automatisée à plusieurs rapports de transmission de façon notamment à augmenter la vitesse de rotation de la pompe, et donc son débit, à bas régime. Un dispositif de changement du rapport de transmission tel que décrit dans WO 2011/061438 est envisageable.

Selon un troisième aspect du système d'alimentation en fluide, le dispositif d'entraînement en rotation du dispositif de pompage cinétique peut comprendre un actionneur pneumatique. L'actionneur pneumatique peut fonctionner par exemple grâce à un prélèvement d'air à partir d'un compresseur du moteur.

Selon un quatrième aspect du système d'alimentation en fluide, le dispositif d'entraînement en rotation de la pompe cinétique peut comprendre un moteur électrique indépendant de la turbomachine.

Selon un cinquième aspect du système d'alimentation en fluide, le système d'alimentation peut comprendre en outre un dispositif de contrôle du débit de fluide délivré en sortie du doseur de fluide.

De préférence, le dispositif de contrôle du débit de fluide comprend un capteur de mesure de la différence de pression entre l'amont et l'aval du doseur de fluide, ledit capteur de mesure étant couplé à un capteur de la position d'un organe mobile de commande de la section de passage de la fente de dosage du doseur de fluide.

La loi de l'hydraulique à travers une section s'écrit : $Q = K_S\sqrt{\Delta P}$, avec Q le débit traversant la section, ΔP le différentiel de pression de part et d'autre de la section et $K_S$ un coefficient proportionnel à la section de passage. Ainsi, si l'on connaît la différence de pression ΔP aux bornes de la section ainsi que la surface de passage au travers de la section, on en déduit le débit.

En variante, le dispositif de contrôle du débit de fluide peut comprendre un débitmètre monté en aval du doseur de fluide.

Un débitmètre est très précis en régime stabilisé et moins en régime transitoire. Cependant, le dosage de fluide doit surtout être précis en régime stabilisé car c'est là que l'aspect thermique est important. De plus, durant les transitoires, il est possible de réguler le déplacement de la fente du doseur de fluide pour obtenir un dosage de fluide en utilisant un modèle de pertes de charges du circuit de fluide qui pourra être recalé en régime stabilisé.

La solution avec le capteur de pression permet de se passer d'un débitmètre et présente une meilleure précision, mais est plus complexe et plus coûteuse que la solution avec le débitmètre.

Selon un sixième aspect du système d'alimentation en fluide, le dispositif de pompage cinétique peut comprendre une pompe centrifuge.

Les pompes cinétiques les plus courantes sont les pompes centrifuges. Une pompe centrifuge fonctionne sur le principe de la force centrifuge appliquée au fluide entraîné en rotation dans la pompe. Elle permet d'élever le fluide en pression selon le carré du rayon de la pompe et avec le carré de la vitesse de rotation.

Selon un septième aspect du système d'alimentation en fluide, la première branche de distribution entre le noeud de séparation et le réducteur est de préférence dépourvue de boucle de recirculation de fluide, de telle sorte que la totalité du fluide en aval du noeud de séparation puisse être utilisée pour alimenter le réducteur.

Selon un huitième aspect du système d'alimentation en fluide, la première branche de distribution comprend plusieurs ramifications destinées chacune à raccorder la sortie du dispositif de pompage à au moins un desdits organes à lubrifier dont le réducteur, au moins deux des ramifications comportant chacune un doseur de fluide monté entre le dispositif de pompage et l'organe raccordé à la ramification, le doseur de fluide de chaque ramification étant actionnable indépendamment des doseurs des autres ramifications..

Cette configuration fournie ainsi un système d'alimentation en fluide comprenant une pompe cinétique commune à plusieurs alimentations et un doseur de fluide spécifique à chaque organe ou groupe d'organes devant avoir un débit de fluide régulé. Les organes peuvent comprendre un ou plusieurs générateurs électriques.

Cette configuration apporte un gain fort pour l'huile des générateurs car le besoin est totalement décorrélé du régime moteur, contrairement au débit que fournit une pompe volumétrique qui dépend du régime.

Un autre objet de l'invention propose un procédé d'utilisation du système d'alimentation en huile de lubrification d'un réducteur d'une turbomachine tel que défini ci-dessus, le procédé comprenant une étape de régulation du débit de l'huile de lubrification par le contrôle du doseur de fluide, et plus particulièrement le contrôle de la position d'un organe mobile de commande du débit du doseur de fluide.

Selon un premier aspect du procédé d'utilisation du système d'alimentation en huile, le procédé comprend une étape mesure de la température de l'huile de lubrification et, si la température mesurée est inférieure à un seuil de température, une étape de chauffage de l'huile de lubrification par le déplacement de l'organe mobile du doseur de fluide dans une position de sur-ouverture afin d'augmenter le débit d'huile de lubrification pompée.

Un autre objet de l'invention propose un ensemble propulsif d'aéronef comprenant un système d'alimentation en huile de lubrification d'un réducteur d'une turbomachine tel que défini ci-dessus.

Brève description des dessins.

L'invention sera mieux comprise à la lecture faite ci-après, à titre indicatif mais non limitatif, en référence aux dessins annexés sur lesquels :

- la figure 1 présente schématiquement un système d'alimentation en fluide selon un premier mode de réalisation ;
- la figure 2 présente schématiquement un système d'alimentation en fluide selon un deuxième mode de réalisation ; et

- la figure 3 présente schématiquement un système d'alimentation en fluide ne formant pas partie de l'invention

Description détaillée de modes de réalisation

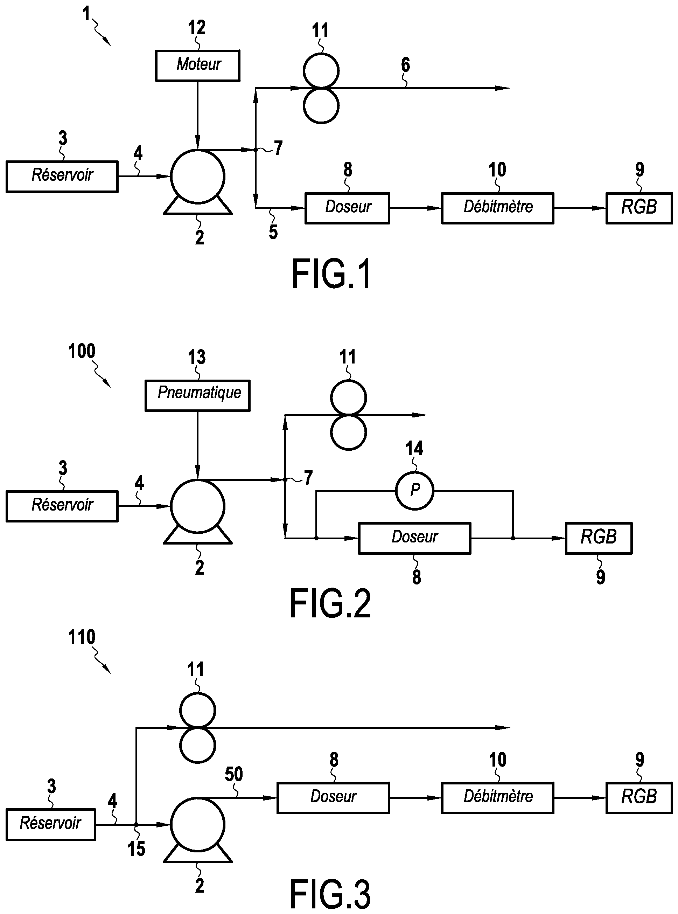

La figure 1 représente schématiquement un système d'alimentation en huile 1 d'une boîte de réduction de puissance d'un moteur d'aéronef comprenant une turbomachine selon un premier mode de réalisation.

Dans le mode de réalisation illustré sur la figure 1, le système d'alimentation 1 comprend une pompe centrifuge 2 raccordée en entrée à un réservoir d'huile 3 via une branche d'alimentation 4 de la pompe centrifuge 2, et deux branches de distribution 5 et 6 raccordées en sortie de la pompe centrifuge 2 via un noeud de séparation 7.

La première branche de distribution 5 comprend un doseur de fluide à fente de dosage 8 raccordé à une boîte de réduction de puissance 9 via un débitmètre 10.

Le doseur d'huile 8 à fente de dosage est connu en soi. Il peut par exemple se présenter sous forme d'un tiroir/fourrure typiquement utilisé pour le dosage de carburant comme celui mentionné dans le document FR 2 950 864. Le déplacement piloté du tiroir dans la fourrure, ou douille, masque plus ou moins la fente. La section découverte de la fente à travers laquelle passe le fluide est ainsi pilotée selon le débit souhaité. Le déplacement du tiroir de ce doseur est actionné par exemple grâce à un organe de type servovalve.

Le débitmètre 10 est utilisé ici pour s'assurer du bon dosage en sortie du doseur d'huile 8.

La seconde branche de distribution 6 comprend, dans l'exemple illustré, une pompe volumétrique 11 raccordée en sortie à d'autres organes non représentés de la turbomachine.

Le système d'alimentation 1 distribue ainsi de l'huile à différents organes de l'ensemble propulsif de l'aéronef. L'huile arrive en amont de la pompe centrifuge 2 depuis le réservoir d'huile 3. La pompe centrifuge 2 permet alors d'élever l'huile en pression et s'adapte au débit nécessaire.

Grâce au gavage de la pompe volumétrique par la pompe cinétique, la pressurisation du réservoir d'huile n'est donc pas nécessaire. La pression de l'huile à l'entrée de la pompe cinétique peut en effet être égale ou proche de la pression atmosphérique. Il peut tout de même être utile dans certaines configurations de pressuriser le réservoir.

La pompe centrifuge 2 est entraînée en rotation à une vitesse décorrélée d'un régime de fonctionnement de la turbomachine.

Dans l'exemple illustré sur la figure 1, la pompe centrifuge 2 est entraînée à vitesse constante par un moteur électrique 12 indépendant du régime de la turbomachine.

En fixant un objectif de montée en pression, par exemple de 10 bars, et en fixant une vitesse de rotation, par exemple de 10 000 tr/min, on en déduit le rayon que la pompe centrifuge doit avoir. Ainsi pour toutes les phases de vol, connaissant la température de l'huile, on connaîtra la pression en aval de la pompe centrifuge.

La pompe centrifuge 2 délivrant de l'huile à une pression donnée, on a une huile sous pression en amont du doseur d'huile 8 à fente de dosage, mais dont le débit est encore libre à ce moment.

C'est la fente de dosage du doseur d'huile 8 qui va réguler ce débit.

Comme rappelé précédemment, la loi de l'hydraulique à travers une section s'écrit : $Q = K_S \sqrt{\Delta P}$. La pression en amont de la fente du doseur d'huile 8 est imposée par la pompe centrifuge 2 et la pression en aval va être imposée par la pression de l'enceinte du réducteur de puissance 9 et par la perte de charge des gicleurs non représentés.

La différence de pression ΔP aux bornes de la fente du doseur d'huile 8 sera donc variable et dépendra du débit dans l'enceinte du réducteur de puissance 9, et pourra donc être modélisée pour gérer les phases transitoires.

La pression en aval de la fente du doseur d'huile 8 est la somme de la pression dans l'enceinte du réducteur de puissance 9, qui dépend du point du domaine de vol, et des pertes de charge à travers les gicleurs, qui dépendent du débit délivré à l'enceinte du réducteur de puissance 9. La somme des deux pressions permet de modéliser la pression avale en tout point de vol et dans toutes les phases de fonctionnement ce qui est très utile pour les phases transitoires.

A partir du modèle de pression différentielle ΔP obtenu, on peut commander le déplacement de la fente en boucle ouverte pour augmenter ou diminuer le débit. L'information délivrée par le débitmètre 10 permet à la fois de recaler le modèle en phase transitoire mais surtout de réguler en phase de vol stabilisé ou lors de phases transitoires légères. Si le modèle est suffisamment précis, il est possible de l'utiliser en vol stabilisé en ayant supprimé le débitmètre.

La figure 2 présente schématiquement un système d'alimentation en huile 100 d'une boîte de réduction de puissance d'un moteur d'aéronef comprenant une turbomachine selon un deuxième mode de réalisation.

Les éléments identiques au système d'alimentation 1 de la figure 1 portent les mêmes références numériques.

Le système d'alimentation 100 du deuxième mode de réalisation diffère du premier mode de réalisation en ce que la pompe centrifuge 2 est entraînée à vitesse variable par un entraînement pneumatique 13 réalisé à partir d'un prélèvement d'air d'un compresseur du moteur.

L'entraînement pneumatique 13 est configuré pour que le régime de vitesse d'entraînement de la pompe centrifuge 2 soit compris dans une plage définie par rapport à un régime de vitesse minimum. La plage de fonctionnement est définie pour que le régime de vitesse de fonctionnement soit compris entre 1,2 fois le régime minimum et deux fois le régime minimum.

Le système d'alimentation 100 du deuxième mode de réalisation diffère en outre du premier mode de réalisation en ce que le débitmètre est remplacé par un capteur de pression 14 monté entre l'entrée et la sortie du doseur d'huile 8. Une telle disposition est indépendante du type d'entraînement de la pompe centrifuge 2, et peut donc s'appliquer également au système d'alimentation 1 du premier mode de réalisation.

Sur la figure 3 est représenté de manière schématique un système d'alimentation 110 en huile d'une boîte de réduction de puissance d'un moteur d'aéronef comprenant une turbomachine.

Les éléments identiques au système d'alimentation 1 de la figure 1 portent les mêmes références numériques.

Ce mode de réalisation diffère du premier mode de réalisation en ce qu'il ne comprend pas de noeud de séparation en sortie de la pompe centrifuge 2 puisqu'il n'y a que la première branche 5 raccordée en sortie de la pompe centrifuge 2, la seconde branche 6 dotée de la pompe volumétrique 11 étant raccordée directement au réservoir via un noeud de séparation 15 prévu sur la branche d'alimentation 4. Le réservoir d'huile 3 devra généralement être pressurisé, de façon à assurer une pression d'huile suffisante en entrée de la pompe volumétrique 11, afin notamment d'éviter les risques de cavitation de la pompe 11.

Dans un mode d'utilisation d'un système d'alimentation en huile selon l'invention, pouvant s'appliquer à tout mode de réalisation du système d'alimentation, on peut prévoir qu'en cas d'utilisation du système d'alimentation dans un environnement à basses températures, l'ouverture du doseur d'huile 8 soit commandée de façon à forcer un débit important à circuler dans le système d'alimentation pour réchauffer l'huile. Pour ce faire, on commandera une sur-ouverture du doseur d'huile afin d'augmenter le débit pompé au-delà de la consigne de débit normal calculée pour des températures plus élevées. Cela crée une recirculation ou un barattage de l'huile dans la boîte de réduction de puissance 9, et permet donc un échauffement de l'huile.

Par ailleurs, il a été décrit dans ce qui précède un dispositif de pompage cinétique comprenant une unique pompe cinétique 2 alimentant le doseur de fluide à fente de dosage. Dans une autre alternative, il peut être prévu à la place d'une unique pompe au moins deux pompes cinétiques reliées fluidiquement en série pour constituer le dispositif de pompage cinétique. Ces pompes cinétiques en série peuvent être entraînées en rotation par un même dispositif d'entraînement, ou encore par des dispositifs d'entraînement indépendants.

Le système d'alimentation offre donc une solution s'adaptant à un besoin de débit variant au cours du vol d'un aéronef. Ce système permet notamment, par rapport aux systèmes connus, de minimiser les pertes énergétiques, et de gérer l'alimentation à très bas régime sans qu'elle soit sur-dimensionnée à haut régime. De plus, la relative simplicité du système permet de gagner en encombrement et en masse.

## Revendications

1. Système d'alimentation (1, 100) en huile de lubrification d'organes d'une turbomachine dont un réducteur (9), le système d'alimentation (1, 100) comprenant :

   - un dispositif de pompage cinétique (2), destiné à être raccordé en entrée à un réservoir d'huile (3) et entraîné en rotation à une vitesse décorrélée d'un régime de fonctionnement de la turbomachine, et comportant une pompe cinétique ou au moins deux pompes cinétiques reliées fluidiquement en série,
   - un noeud de séparation (7) raccordé à la sortie du dispositif de pompage cinétique (2),
   - une première branche de distribution (5) pour lubrifier au moins le réducteur (9), raccordée audit dispositif de pompage cinétique (2) via le noeud de séparation (7),
   - une seconde branche de distribution (6) pour lubrifier d'autres organes, raccordée audit dispositif de pompage cinétique (2) via le noeud de séparation (7), et comportant une pompe volumétrique (11), et

   au moins un doseur de fluide (8) à fente de dosage, alimenté par le dispositif de pompage cinétique (2) via le noeud de séparation (7) et destiné à alimenter le réducteur (9).

2. Système d'alimentation (1, 100) selon la revendication 1, comprenant en outre un dispositif d'entraînement (12, 13) en rotation du dispositif de pompage cinétique (2) à une vitesse constante.

3. Système d'alimentation (1, 100) selon la revendication 1, comprenant en outre un dispositif d'entraînement (12, 13) du dispositif de pompage cinétique (2) à un régime de rotation pouvant varier entre un régime minimum et un régime maximum, ledit régime maximum étant supérieur à 1,2 fois le régime minimum et inférieur à 2 fois le régime minimum.

4. Système d'alimentation selon la revendication 3, dans lequel le dispositif d'entraînement en rotation du dispositif de pompage cinétique (2) comprend un arbre d'entraînement couplé à un arbre de turbine de la turbomachine par l'intermédiaire d'une boîte de vitesses automatisée à plusieurs rapports de transmission.

5. Système d'alimentation (100) selon la revendication 2 ou 3, dans lequel le dispositif d'entraînement en rotation du dispositif de pompage cinétique (2) comprend un actionneur pneumatique (13).

6. Système d'alimentation (1) selon l'une des revendications 2 ou 3, dans lequel le dispositif d'entraînement en rotation du dispositif de pompage cinétique (2) comprend un moteur électrique (12).

7. Système d'alimentation (1, 100) selon l'une quelconque des revendications 1 à 6, comprenant en outre un dispositif de contrôle (10, 14) du débit de fluide délivré en sortie du doseur de fluide (8).

8. Système d'alimentation (100) selon la revendication 7, dans lequel le dispositif de contrôle du débit de fluide comprend un capteur de mesure de la différence de pression (14) entre l'amont et l'aval du doseur de fluide (8), ledit capteur de mesure (14) étant couplé à un capteur de la position d'un organe mobile de commande de la section de passage de la fente de dosage du doseur de fluide (8).

9. Système d'alimentation (1, 100) selon l'une quelconque des revendications 1 à 8, dans lequel ledit dispositif de pompage cinétique comprend au moins une pompe centrifuge (2).

10. Système d'alimentation (1, 100) selon l'une des revendications 1 à 9, dans lequel la première branche de distribution (5) entre le noeud de séparation (7) et le réducteur (9) est dépourvue de boucle de recirculation de fluide.

11. Système d'alimentation (1, 100) selon l'une quelconque des revendications 1 à 10, dans lequel la première branche de distribution (5) comprend plusieurs ramifications destinées chacune à raccorder la sortie du dispositif de pompage (2) à au moins un desdits organes à lubrifier dont le réducteur (9), au moins deux des ramifications comportant chacune un doseur de fluide monté entre le dispositif de pompage (2) et l'organe raccordé à la ramification, le doseur de fluide de chaque ramification étant actionnable indépendamment des doseurs des autres ramifications.

12. Système d'alimentation (1, 100) selon l'une quelconque des revendications 1 à 11, dans lequel le réservoir d'huile (3) est un réservoir non pressurisé, et le système (1, 100) comprend en outre au moins une pompe de récupération d'huile configurée pour réinjecter l'huile dans ledit réservoir d'huile.

13. Procédé d'utilisation du système d'alimentation selon l'une quelconque des revendications 1 à 11, le procédé comprenant une étape de régulation du débit de l'huile de lubrification par le contrôle de la position d'un organe mobile de commande de la section de passage du doseur de fluide (8).

14. Procédé selon la revendication 13, comprenant une étape de mesure de la température de l'huile de lubrification et, si la température mesurée est inférieure à un seuil de température, une étape de réchauffage de l'huile par la commande du doseur de fluide dans une position de sur-ouverture afin d'augmenter le débit d'huile de lubrification pompée.

15. Ensemble propulsif d'aéronef comprenant un système d'alimentation (1, 100) en huile de lubrification d'un réducteur d'une turbomachine selon l'une quelconque des revendications 1 à 11.

**Patentansprüche**

1. System zur Schmierölversorgung (1, 100) von Organen einer Turbomaschine, darunter ein Untersetzungsgetriebe (9), wobei das Versorgungssystem (1, 100) umfasst:

- eine kinetische Pumpvorrichtung (2), die dazu bestimmt ist, eingangsseitig mit einem Ölbehälter (3) verbunden zu werden, und mit einer von einer Betriebsdrehzahl der Turbomaschine entkoppelten Geschwindigkeit drehangetrieben wird, und die eine kinetische Pumpe oder wenigstens zwei fluidisch in Reihe verbundene kinetische Pumpen umfasst,
- einen Trennungsknoten (7), der mit dem Ausgang der kinetischen Pumpvorrichtung (2) verbunden ist,
- einen ersten Verteilungszweig (5) zum Schmieren wenigstens des Untersetzungsgetriebes (9), der über den Trennungsknoten (7) mit der kinetischen Pumpvorrichtung (2) verbunden ist,
- einen zweiten Verteilungszweig (6) zum Schmieren von weiteren Organen, der über den Trennungsknoten (7) mit der kinetischen Pumpvorrichtung (2) verbunden ist und eine Verdrängerpumpe (11) umfasst, und

wenigstens eine Fluiddosiervorrichtung (8) mit Dosierschlitz, welche durch die kinetische Pumpvorrichtung (2) über den Trennungsknoten (7) versorgt wird und dazu bestimmt ist, das Untersetzungsgetriebe (9) zu versorgen.

2. Versorgungssystem (1, 100) nach Anspruch 1, ferner umfassend eine Vorrichtung zum Drehantreiben (12, 13) der kinetischen Pumpvorrichtung (2) mit einer konstanten Geschwindigkeit.

3. Versorgungssystem (1, 100) nach Anspruch 1, ferner umfassend eine Vorrichtung zum Antreiben (12, 13) der kinetischen Pumpvorrichtung (2) mit einer Drehzahl, die zwischen einer Mindestdrehzahl und einer Höchstdrehzahl variieren kann, wobei die Höchstdrehzahl größer als das 1,2-fache der Mindestdrehzahl und kleiner als das 2-fache der Mindestdrehzahl ist.

4. Versorgungssystem nach Anspruch 3, bei dem die Vorrichtung zum Drehantreiben der kinetischen Pumpvorrichtung (2) eine Antriebswelle umfasst, die mittels eines automatisierten Getriebes mit mehreren Übersetzungsverhältnissen mit einer Turbinenwelle der Turbomaschine gekoppelt ist.

5. Versorgungssystem (100) nach Anspruch 2 oder 3, bei dem die Vorrichtung zum Drehantreiben der kinetischen Pumpvorrichtung (2) einen pneumatischen Aktor (13) umfasst.

6. Versorgungssystem (1) nach einem der Ansprüche 2 oder 3, bei dem die Vorrichtung zum Drehantreiben der kinetischen Pumpvorrichtung (2) einen Elektromotor (12) umfasst.

7. Versorgungssystem (1, 100) nach einem der Ansprüche 1 bis 6, ferner umfassend eine Vorrichtung zum Steuern (10, 14) der am Ausgang der Fluiddosiervorrichtung (8) bereitgestellten Fluidmenge.

8. Versorgungssystem (100) nach Anspruch 7, bei dem die Vorrichtung zum Steuern der Fluidmenge einen Sensor zur Messung der Druckdifferenz (14) zwischen der stromaufwärtigen Seite und der stromabwärtigen Seite der Fluiddosiervorrichtung (8) umfasst, wobei der Messsensor (14) mit einem Sensor für die Position eines beweglichen Organs zum Steuern des Durchlassquerschnitts des Dosierschlitzes der Fluiddosiervorrichtung (8) gekoppelt ist.

9. Versorgungssystem (1, 100) nach einem der Ansprüche 1 bis 8, bei dem die kinetische Pumpvorrichtung wenigstens eine Zentrifugalpumpe (2) umfasst.

10. Versorgungssystem (1, 100) nach einem der Ansprüche 1 bis 9, bei dem der erste Verteilungszweig (5) zwischen dem Trennungsknoten (7) und dem Untersetzungsgetriebe (9) keine Fluidumwälzschleife aufweist.

11. Versorgungssystem (1, 100) nach einem der Ansprüche 1 bis 10, bei dem der erste Verteilungszweig (5) mehrere Verzweigungen umfasst, die jeweils dazu bestimmt sind, den Ausgang der Pumpvorrichtung (2) mit wenigstens einem der zu schmierenden Organe, darunter das Untersetzungsgetriebe (9), zu verbinden, wobei wenigstens zwei der Verzweigungen jeweils eine Fluiddosiervorrichtung umfassen, die zwischen der Pumpvorrichtung (2) und dem mit der Verzweigung verbundenen Organ angebracht ist, wobei die Fluiddosiervorrichtung einer jeden Verzweigung unabhängig von den Dosiervorrichtungen der anderen Verzweigungen betätigbar ist.

12. Versorgungssystem (1, 100) nach einem der Ansprüche 1 bis 11, bei dem der Ölbehälter (3) ein nicht unter Druck stehender Behälter ist und das System (1, 100) ferner wenigstens eine Ölrückgewinnungspumpe umfasst, die dazu ausgelegt ist, das Öl wieder in den Ölbehälter einzuspritzen.

13. Verfahren zur Verwendung des Versorgungssystems nach einem der Ansprüche 1 bis 11, wobei das Verfahren einen Schritt zum Regeln des Durchsatzes des Schmieröls durch Steuern der Position eines beweglichen Organs zum Steuern des Durchlassquerschnitts der Fluiddosiervorrichtung (8) umfasst.

14. Verfahren nach Anspruch 13, umfassend einen Schritt zum Messen der Temperatur des Schmieröls und, wenn die gemessene Temperatur unter einem Temperaturschwellwert liegt, einen Schritt zum Wiedererhitzen des Öls durch das Steuern der Fluiddosiervorrichtung in eine Position eines übermäßigen Öffnens, um die gepumpte Schmierölmenge zu erhöhen.

15. Antriebsanordnung eines Luftfahrzeugs, umfassend ein System zur Schmierölversorgung (1, 100) eines Untersetzungsgetriebes einer Turbomaschine nach einem der Ansprüche 1 bis 11.

**Claims**

1. A feed system (1, 100) for feeding lubricating oil to members of a turbine engine including a reduction gearbox (RGB) (9), the feed system (1, 100) comprising:

   - a nonpositive-displacement pump device (2) for having its inlet connected to an oil tank (3) and driven in rotation at a speed that is not correlated with an operating speed of the turbine engine, and comprising a nonpositive-displacement pump or at least two nonpositive-displacement pumps connected in a series fluid-flow connection;
   - a separator node (7) connected to the outlet of the nonpositive-displacement pump device (2);
   - a first delivery branch (5) for lubricating at least the RGB (9), which branch is connected to said nonpositive-displacement pump device (2) via the separator node (7);

   - a second delivery branch (6) for lubricating other members, which branch is connected to said nonpositive-displacement pump device (2) via the separator node (7) and includes a positive-displacement pump (11); and
   - at least one fluid metering device (8) having a metering slot and fed by the nonpositive-displacement pump device (2) via the separator node (7) for the purpose of feeding the RGB (9).

2. A feed system (1, 100) according to claim 1, further comprising a drive device (12, 13) for driving the positive-displacement pump device (2) in rotation at constant speed.

3. A feed system (1, 100) according to claim 1, further comprising a drive device (12, 13) for driving the positive-displacement pump device (2) at a speed of rotation that can vary between a minimum speed and a maximum speed, said maximum speed being not less than 1.2 times the minimum speed and not greater than twice the minimum speed.

4. A feed system according to claim 3, wherein the device for driving the nonpositive-displacement pump device (2) in rotation comprises a drive shaft coupled to a turbine shaft of the turbine engine via an automatic gearbox having a plurality of transmission ratios.

5. A feed system (100) according to claim 2 or claim 3, wherein the device for driving the nonpositive-displacement pump device (2) in rotation comprises a pneumatic actuator (13).

6. A feed system (1) according to claim 2 or claim 3, wherein the device for driving the nonpositive-displacement pump device (2) in rotation comprises an electric motor (12).

7. A feed system (1, 100) according to any one of claims 1 to 6, further comprising a monitor device (10, 14) for monitoring the fluid flow rate delivered at the outlet from the fluid metering device (8).

8. A feed system (100) according to claim 7, wherein the monitor device for monitoring the fluid flow rate comprises a measurement sensor (14) for measuring the pressure difference between the upstream and downstream sides of the fluid metering device (8), said measurement sensor (14) being coupled to a sensor for sensing the position of a movable member for controlling the flow section of the metering slot of the fluid metering device (8) .

9. A feed system (1, 100) according to any one of claims 1 to 8, wherein said nonpositive-displacement pump device comprises at least one centrifugal pump (2).

**10.** A feed system (1, 100) according to any one of claims 1 to 9, wherein the first delivery branch (5) between the separator node (7) and the RGB (9) does not have a fluid recirculation loop.

**11.** A feed system (1, 100) according to any one of claims 1 to 10, wherein the first delivery branch (5) comprises a plurality of ramifications, each for connecting the outlet of the pump device (2) to at least one of said members for lubricating, including the RGB (9), at least two of the ramifications each including a fluid metering device connected between the pump device (2) and the member connected to the ramification, the fluid metering device of each ramification being actuatable independently of the metering devices of the other ramifications.

**12.** A feed system (1, 100) according to any one of claims 1 to 11, wherein the oil tank (3) is a non-pressurized tank, and the system (1, 100) further comprises at least one oil recovery pump configured to reinject oil into said oil tank.

**13.** A method of using the feed system according to any one of claims 1 to 11, the method comprising a step of regulating the flow rate of the lubricating oil by controlling the position of the movable member for controlling the flow section of the fluid metering device (8) .

**14.** A method according to claim 13, comprising a step of measuring the temperature of the lubricating oil, and if the measured temperature is below a threshold temperature, a step of heating the oil by controlling the fluid metering device to occupy an excessively open position in order to increase the flow rate with which lubricating oil is pumped.

**15.** An aircraft propulsion assembly including a feed system (1, 100) according to any one of claims 1 to 11, for feeding lubricating oil to a reduction gearbox of a turbine engine.

FIG.1

FIG.2

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2882095
- DE 4304482 A1
- US 5168704 A1
- WO 2011061438 A
- FR 2950864